(19) Europäisches Patentamt
European Patent Office
Office européen des brevets

(11)  **EP 1 456 260 B1**

(12)  **FASCICULE DE BREVET EUROPEEN**

(45) Date de publication et mention
de la délivrance du brevet:
**23.04.2008  Bulletin 2008/17**

(51) Int Cl.:
***C08F 236/04*** *(2006.01)*   ***C08F 4/54*** *(2006.01)*

(21) Numéro de dépôt: **02796566.4**

(22) Date de dépôt: **04.12.2002**

(86) Numéro de dépôt international:
**PCT/EP2002/013709**

(87) Numéro de publication internationale:
**WO 2003/048221 (12.06.2003 Gazette 2003/24)**

(54) **PROCEDE DE PREPARATION DE COPOLYMERES BUTADIENE/ISOPRENE ET CES COPOLYMERES**

VERFAHREN ZUR HERSTELLUNG VON BUTADIEN/ISOPREN-COPOLYMEREN UND DABEI ERHALTENE COPOLYMERE

METHOD FOR PREPARING BUTADIENE/ISOPRENE COPOLYMERS AND RESULTING COPOLYMERS

(84) Etats contractants désignés:
**AT BE BG CH CY CZ DE DK EE ES FI FR GB GR IE IT LI LU MC NL PT SE SI SK TR**

(30) Priorité:  **07.12.2001  FR 0115888**

(43) Date de publication de la demande:
**15.09.2004  Bulletin 2004/38**

(73) Titulaires:
• **Société de Technologie Michelin
63000 Clermont-Ferrand Cedex 09 (FR)**
• **Michelin Recherche et Technique S.A.
1763 Granges-Paccot (CH)**

(72) Inventeur: **LAUBRY, Philippe
Greer, SC 29650 (US)**

(74) Mandataire: **Hiebel, Robert
Manufacture Française des Pneumatiques,
Michelin,
Service SGD/LG/PI LADOUX
63040 Clermont-Ferrand Cedex 09 (FR)**

(56) Documents cités:
**EP-A- 0 629 640      EP-A- 0 846 707**

• **MONAKOV Y B ET AL: "INVESTIGATION OF THE POLYMERIZATION OF ISOPRENE IN THE PRESENCE OF CATALYST SYTSTEM CONTAINING LANTHANIDE SALTS" DOKLADY PHYSICAL CHEMISTRY, CONSULTANTS BUREAU, NEW YORK, NY, US, vol. 234, no. 5, 1977, pages 587-589, XP001014427 ISSN: 0012-5016**
• **PATENT ABSTRACTS OF JAPAN vol. 009, no. 138 (C-286), 13 juin 1985 (1985-06-13) & JP 60 023406 A (ASAHI KASEI KOGYO KK), 6 février 1985 (1985-02-06)**

**Description**

La présente invention concerne un procédé de préparation de copolymères statistiques de butadiène et d'isoprène, et de tels copolymères obtenus par ce procédé.

Pour la préparation de copolymères de butadiène et d'isoprène statistiques, c'est-à-dire censés présenter une répartition équi-probable ou aléatoire des motifs butadiène et isoprène, il est connu d'utiliser des systèmes catalytiques comprenant notamment un sel d'un métal de terre rare en suspension dans un solvant hydrocarboné inerte, un agent d'alkylation et un donneur d'halogène.

Or, le butadiène polymérise sensiblement plus rapidement que l'isoprène avec de tels systèmes catalytiques, ce qui génère une répétition de motifs butadiène à une extrémité de chaîne des copolymères ainsi obtenus, et une répétition de motifs isoprène à l'autre extrémité.

Le document de brevet européen EP-A-629 640 enseigne dans ses exemples de réalisation d'utiliser, pour préparer des copolymères statistiques de butadiène et d'isoprène, des systèmes catalytiques à base :

-    d'hydrure de diisobutylaluminium à titre d'agent d'alkylation, mélangé à du n-butanol ou du triphénylsilanol et à du butadiène,
-    de néodécanoate de néodyme ou d'octanoate de praséodyme, à titre de sel d'un métal de terre rare, et
-    de bromure d'allyle, à titre de donneur d'halogène.

Un inconvénient majeur de ces systèmes catalytiques réside dans la variabilité des températures de transition vitreuses (Tg) des copolymères obtenus, les systèmes catalytiques et les conditions de polymérisation utilisés étant analogues (voir les exemples 3 et 4 dans lesquels les valeurs de Tg sont respectivement de -97° C et de -90° C).

Un autre inconvénient réside dans le fait que chaque copolymère obtenu présente un taux de motifs butadiène/ isoprène (variant de 1,35/ 1 à 1,7/ 1) qui est sensiblement différent du taux de monomères butadiène/ isoprène (environ 1/1) utilisé pour la polymérisation, ce qui signifie que le butadiène et l'isoprène ne sont pas équi-réactifs lors de la polymérisation.

Il en résulte que les systèmes catalytiques décrits dans ce document ne permettent pas d'obtenir avec une reproductibilité satisfaisante des copolymères qui sont réellement statistiques, c'est-à-dire dans lesquels le butadiène et l'isoprène sont répartis d'une manière équi-probable.

Le but de la présente invention est de proposer un système catalytique qui permette de remédier à ces inconvénients, et il est atteint en ce que la demanderesse a découvert d'une manière inattendue qu'un système catalytique de type « préformé » à base d'au moins:

-    un monomère diène conjugué,
-    un sel d'un ou de plusieurs métaux de terre rare (métaux ayant un numéro atomique compris entre 57 et 71 dans le tableau périodique des éléments de Mendeleev) d'un acide phosphorique organique, ledit sel étant en suspension dans au moins un solvant hydrocarboné inerte, saturé et de type aliphatique ou alicyclique,
-    un agent d'alkylation constitué d'un alkylaluminium de formule $AlR_3$ ou $HAlR_2$, le rapport molaire (agent d'alkylation / sel de terre rare) présentant une valeur allant de 1 à 8, et
-    un donneur d'halogène constitué d'un halogénure d'alkylaluminium,

lorsqu'on le fait réagir en présence de butadiène et d'isoprène dans un solvant de polymérisation inerte ou en masse, permet de préparer un copolymère statistique de butadiène et d'isoprène dans lequel les unités butadiène et isoprène se succèdent d'une manière pratiquement équi-probable, dans lequel lesdites unités butadiène et isoprène comportent chacune un taux d'enchaînements cis-1,4 égal ou supérieur à 95,0 %, et qui présente une viscosité inhérente élevée.

A titre de monomère diène conjugué utilisable pour « préformer » le système catalytique selon l'invention, on peut citer le 1, 3-butadiène, à titre préférentiel.

On peut également citer le 2-méthyl 1, 3-butadiène (ou isoprène), les 2, 3-di (alcoyle en C1 à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène, le 1, 3-pentadiène, le 2, 4-hexadiène, ou tout autre diène conjugué ayant entre 4 et 8 atomes de carbone.

On notera que le rapport molaire (monomère / sel de terre rare) peut présenter une valeur allant de 25 à 50.

Selon une autre caractéristique de l'invention, ledit sel de terre rare est constitué d'une poudre non hygroscopique ayant une légère tendance à s'agglomérer à la température ambiante.

-    Selon un mode préférentiel de réalisation de l'invention, le solvant hydrocarboné inerte dans lequel ledit sel de terre rare est en suspension est un solvant aliphatique ou alicyclique de bas poids moléculaire, tel que le cyclohexane, le méthylcyclohexane, le n-heptane, ou un mélange de ces solvants.

- Selon un autre mode de réalisation de l'invention, le solvant utilisé pour la suspension du sel de terre rare est un mélange d'un solvant aliphatique de haut poids moléculaire comprenant une huile paraffinique, par exemple de l'huile de vaseline, et d'un solvant de bas poids moléculaire tel que ceux susmentionnés (par exemple le méthylcyclohexane).

On réalise cette suspension en procédant à un broyage dispersif du sel de terre rare dans cette huile paraffinique, de sorte à obtenir une suspension très fine et homogène du sel.

Selon une autre caractéristique de l'invention, ledit système catalytique comprend le métal de terre rare selon une concentration égale ou sensiblement égale à 0,02 mol/l.

Selon un exemple préférentiel de réalisation de l'invention, on utilise à titre de sel un tris[bis(2-éthylhexyl) phosphate] dudit ou desdits métaux de terre rare.

A titre encore plus préférentiel, ledit sel de terre rare est le tris[bis(2-éthylhexyl)phosphate] de néodyme.

A titre d'agent d'alkylation utilisable dans le système catalytique selon l'invention, on peut citer des alkylaluminiums tels que:

- des trialkylaluminiums, par exemple le triisobutylaluminium, ou
- des hydrures de dialkylaluminium, par exemple l'hydrure de diisobutylaluminium.

On notera que cet agent d'alkylation est de préférence constitué de l'hydrure de diisobutylaluminium (appelé HDiBA dans la suite de la présente description).

A titre de donneur d'halogène utilisable dans le système catalytique selon l'invention, on peut citer des halogénures d'alkylaluminium, de préférence le chlorure de diéthylaluminium (appelé CDEA dans la suite de la présente description).

On notera que le rapport molaire (donneur d'halogène / sel de terre rare) peut présenter une valeur allant de 2,6 à 3.

Selon l'invention, le procédé de préparation dudit système catalytique comprend la mise en oeuvre des étapes suivantes :

- dans une première étape optionnelle de solvatation, on réalise une suspension dudit sel de terre(s) rare(s) dans ledit solvant hydrocarboné inerte,
- dans une seconde étape, on ajoute à la suspension obtenue à la première étape ledit monomère diène conjugué ou bien, dans le cas où la première étape n'a pas été mise en oeuvre, on ajoute audit sel ledit solvant en plus dudit monomère diène conjugué,
- dans une troisième étape, on ajoute ledit agent d'alkylation à la suspension obtenue au terme de ladite seconde étape pour l'obtention d'un sel alkylé, et
- dans une quatrième étape, on ajoute ledit donneur d'halogène audit sel alkylé.

Selon une caractéristique préférentielle de l'invention, on utilise un système catalytique qui est tel que ledit rapport molaire (agent d'alkylation / sel de terre rare) appartient à un domaine allant de 1 à 5.

Selon une autre caractéristique de l'invention, la réaction de copolymérisation du butadiène et de l'isoprène au moyen du système catalytique précité peut être mise en oeuvre dans une plage de températures allant de -30° C à 100° C.

Les copolymères statistiques de butadiène et d'isoprène obtenus par le procédé selon l'invention sont tels que les unités butadiène et isoprène se succèdent d'une manière équi-probable, cette succession aléatoire pouvant être exprimée par la loi statistique de Bernouilli :

Si l'on considère des variables aléatoires binaires indépendantes $Z_i$ relatives aux enchaînements des unités butadiène et isoprène dans un copolymère obtenu par le procédé selon l'invention, et les probabilités de succès $\pi_i$ et donc l'espérance $E(Z_i) = \pi_i$ associées à ces variables, les fonctions de densité desdites variables sont éléments de la famille :

$$f(Z_i, \pi_i) = (1 - \pi_i) \exp \left\{ Z_i \ln \left( \frac{\pi_i}{1 - \pi_i} \right) \right\}.$$

Cet enchaînement équi-probable des unités butadiène et isoprène dans le copolymère statistique selon l'invention peut également être exprimé par le fait que la température de transition vitreuse $T_{Gexp}$ dudit copolymère, mesurée par la technique d'analyse enthalpique différentielle, satisfait à la relation suivante :

$$-0,05 \leq (T_{Gexp} - T_{Gth}) / T_{Gth} \leq 0,05$$

et, de préférence, à la relation suivante :

$$-0,02 \leq (T_{Gexp} - T_{Gth}) / T_{Gth} \leq 0,02,$$

où $T_{Gth}$ est une température de transition vitreuse théorique dudit copolymère, calculée selon la loi de Fox :

$$1/T_{Gth} = \alpha/T_{G(BR)} + \beta/ T_{G(IR)} ,$$

où $T_{G(BR)}$ et $T_{G(IR)}$ sont respectivement les températures de transition vitreuse, mesurées par la technique d'analyse enthalpique différentielle, d'un polybutadiène et d'un polyisoprène synthétisés au moyen dudit système catalytique.

On notera également que les monomères butadiène et isoprène sont pratiquement équi-réactifs lors de la réaction de copolymérisation mise en oeuvre au moyen du procédé selon l'invention, ce qui se traduit par le fait que les fractions massiques $X_b$ et $X_i$ d'unités butadiène et isoprène dans ledit copolymère et les fractions massiques $X_b$ et $x_i$ de monomères butadiène et isoprène utilisées vérifient les relations suivantes :

$$-0,04 \leq (X_b - x_b) / x_b \leq 0,04 \qquad \text{et} \qquad -0,04 \leq (X_i - x_i) / x_i \leq 0,04.$$

La microstructure des copolymères de butadiène et d'isoprène selon l'invention est telle que les unités butadiène et isoprène présentes dans ces copolymères comportent chacune un taux d'enchaînements cis-1,4, mesuré par la technique de résonance magnétique nucléaire du carbone 13 ou de dosage par proche infrarouge, qui est égal ou supérieur à 95,0 %, de préférence égal ou supérieur à 98,0 % et, à titre encore plus préférentiel, égal à 99,0 %.

On notera également que ce domaine de taux d'enchaînements cis-1,4 tient compte de mesures établies au moyen, d'une part, de la technique de dosage par proche infrarouge après un calibrage des échantillons de copolymères réalisé dans le cadre de l'analyse RMN[13]C et, d'autre part, de l'analyse RMN[13]C (avec pour cette analyse une incertitude de mesure de plus ou moins 0,1 %). La précision des valeurs de taux d'enchaînements cis-1,4 est ainsi accrue, par rapport à celle des valeurs de taux mentionnées dans l'état de la technique à ce jour.

On notera en outre que ces taux particulièrement élevés d'enchaînements cis-1,4 obtenus pour les unités butadiène et isoprène d'un copolymère selon l'invention sont indépendants de la quantité de système catalytique utilisée.

Concernant la viscosité inhérente de ces copolymères selon l'invention, cette viscosité, mesurée à 25° C et à une concentration de 0,1 g/dl dans le toluène, est égale ou supérieure à 2,5 dl/g, avantageusement égale ou supérieure à 3,0 dl/g.

## 1. PREPARATION DE SYSTEMES CATALYTIQUES SELON L'INVENTION:

### 1) Synthèse d'un sel de phosphate organique de néodyme selon l'invention :

On a réalisé une pluralité d'essais pour la synthèse de ce sel. On a utilisé pour chacun de ces essais une même méthode de synthèse, qui est détaillée ci-après.

a) Synthèse d'une solution aqueuse de néodyme $NdCl_3$, $6H_2O$ :

Dans un bécher de 600 ml de forme « haute », on pèse 96 g de $Nd_2O_3$ (commercialisé par la société RHODIA), qui a été dosé par complexométrie à 85,3 % en Nd (85,7 % en théorie), soit présentant 0,57 mol de Nd.

On ajoute 80 ml d'eau déminéralisée. Sous une hotte aspirante, avec une agitation magnétique et à température ambiante, on ajoute lentement 150 ml d'HCl concentré à 36 % en poids (d = 1,18), soit 1,75 mol d'HCl (rapport molaire HCl/Nd = 1,75/0,57 = 3,07).

La réaction $Nd_2O_3 + 6\ HCl + 9\ H_2O \rightarrow 2\ NdCl_3, 6H_2O$ est très exothermique.

Lorsque tout l'acide chlorhydrique a été ajouté, on porte la solution à ébullition sous agitation magnétique, pour éliminer l'excès d'acide chlorhydrique. La solution aqueuse de $NdCl_3$ est limpide et de couleur mauve. Il ne reste pas de produit insoluble ($Nd_2O_3$).

On procède ensuite à l'évaporation de cette solution jusqu'à obtenir un volume d'environ 130 ml dans le bécher. La solution de $NdCl_3, 6H_2O$ est alors très concentrée (elle cristallise à température ambiante).

Puis on verse dans un bidon de 10 litres contenant 4500 ml d'eau déminéralisée la solution concentrée de $NdCl_3$ sous agitation et à température ambiante (en utilisant un moteur avec agitateur en forme d'ancre).

Le pH de la solution, mesuré à 25° C, est voisin de 4.

Puis on ajoute à la solution 1500 ml d'acétone technique. Il ne reste pas de produit insoluble, et la solution ainsi obtenue est de couleur rose.

b) Synthèse d'un phosphate organique de sodium de formule $[RO]_2P(O)ONa$ (R=2-éthylhexyl):

Dans un bécher de 5 litres contenant 1500 ml d'eau déminéralisée, on dissout 68 g de NaOH en pastilles, soit 1,70 mol. Dans un autre bécher de 3 litres contenant 500 ml d'acétone, on dissout 554 g d'un acide phosphorique organique (l'acide bis(2-éthylhexyl) phosphorique, répertorié dans l'ouvrage « Aldrich » sous la référence 23,782-5), soit 1,72 mol de cet acide. Le rapport molaire NaOH / acide phosphorique organique est de 1,70 / 1,72, soit 0,99.

A température ambiante et en agitant à la main à l'aide d'un agitateur en verre, on verse la solution dudit acide phosphorique organique dans la solution de NaOH. La réaction est la suivante :

$$[RO]_2P(O)OH + NaOH \rightarrow [RO]_2P(O)ONa + H_2O.$$

Elle est légèrement exothermique, et l'on obtient une solution homogène de couleur jaunâtre. Le pH de la solution, mesuré à 25° C, est voisin de 7.

c) Synthèse d'un sel phosphaté de néodyme de formule $[[RO]_2P(O)O]_3Nd$:

- On verse sous vive agitation (moteur avec agitateur en forme d'ancre) et à température ambiante la solution de phosphate organique de Na obtenue au paragraphe b) ci-dessus dans la solution aqueuse de $NdCl_3,6H_2O$ obtenue au paragraphe a) ci-dessus.

Il se forme immédiatement un précipité blanc très fin. On maintient le mélange obtenu sous agitation pendant 30 minutes, après l'addition de tout le phosphate organique de Na (selon un rapport molaire $(RO)_2P(O)ONa/NdCl_3$ = 1,70/0,57 = 2,98). La réaction est la suivante :

$$3\ [RO]_2P(O)ONa + NdCl_3,6H_2O \rightarrow Nd[OP(O)[OR]_2]_3 + 3\ NaCl + 6\ H_2O.$$

- On récupère et on lave le sel phosphaté de néodyme ainsi obtenu dans une centrifugeuse équipée d'une "chaussette".

Le pH des eaux « mères » est compris entre 3 et 4 à 25° C. Ces eaux « mères » sont incolores et limpides.

On scinde en deux échantillons le sel obtenu, puis on lave chaque échantillon avec un mélange acétone/ eau déminéralisée en réalisant trois fois le cycle de lavage décrit ci-dessous, afin d'éliminer tous les chlorures.

Chaque cycle de lavage est réalisé dans un seau de 10 litres en matière plastique contenant initialement 2 litres d'acétone. On procède à l'homogénéisation de chaque échantillon et de l'acétone au moyen d'un homogénéiseur « Ultra-Turrax » pendant environ 1 minute, afin d'obtenir une solution de type lait.

On ajoute ensuite 4 litres d'eau déminéralisée dans le seau, puis on homogénéise le mélange obtenu au moyen du même homogénéiseur pendant 3 minutes.

On procède à la centrifugation du mélange ainsi obtenu puis on récupère le sel phosphaté de néodyme dans la "chaussette".

Sur la dernière eau de lavage, le test analytique qualitatif des chlorures est quasi-négatif (la réaction est: $NaCl + AgNO_3$ (milieu $HNO_3$) $\rightarrow AgCl \downarrow + NaNO_3$).

On sèche le sel de néodyme ainsi lavé dans une étuve à 60° C, sous vide et avec courant d'air pendant environ 80 heures.

Le rendement final pour chacun des essais de synthèse réalisés est compris entre 95 % et 98 %, suivant les pertes dues aux lavages. On obtient à chaque fois environ 600 g de sel phosphaté de néodyme à l'état sec.

Les teneurs massiques en néodyme, déterminées à la fois par la technique de titrage complexométrique en retour par l'acide diéthylène diamine tétracétique (EDTA) et par la technique de spectrométrie d'émission atomique couplée à un plasma induit (ICP/AES), sont sensiblement comprises entre 12,5 % et 12,8 % (pour un taux théorique $\tau$ de 13,01 %, avec $\tau$ = [144,24 / 1108,50] x 100, où 144,24 g/mol = masse molaire du néodyme).

Pour chacune de ces deux techniques, les mesures de teneur en néodyme ont été effectuées après minéralisation acide du sel par voie humide, soit sur bain de sable en système ouvert, soit en micro-ondes en système fermé.

La technique de titrage complexométrique par l'EDTA en retour consiste en un titrage en retour avec complexation du néodyme, par un excès d'EDTA (l'acide diéthylène diamine tétracétique), dans lequel on dose l'EDTA en excès à pH=4,6 par du sulfate de zinc.

On a utilisé un indicateur coloré avec détection photométrique du point d'équivalence.

La technique de spectrométrie d'émission atomique couplée à un plasma induit est une technique d'analyse élémentaire basée sur l'observation des raies émises par des atomes parvenus dans un état excité au sein d'un plasma.

Les raies d'émission qui ont été utilisées pour l'analyse du néodyme correspondent à des longueurs d'onde de 406,109 nm et 401,225 nm.

Pour mettre en oeuvre cette technique de spectrométrie, on a réalisé un étalonnage préalable avec des sels « témoin » de néodyme présentant une teneur connue en néodyme.

Le tableau ci-dessous rend compte des teneurs en Nd obtenues au moyen de ces deux techniques (le nombre d'essais réalisés sur chaque échantillon de sel figure entre parenthèses).

| Echantillons de sels analysés | Taux de Nd en % obtenus par titrage complexométrique | Taux de Nd en % obtenus par ICP/AES | Ecart relatif entre les 2 techniques |
|---|---|---|---|
| sel phosphaté de Nd $[[RO]_2P(O)O]_3Nd$ | 12,8 (9) | 12,8 (3) | 0 % |
| sel phosphaté de Nd $[[RO]_2P(O)O]_3Nd$ | 12,8 (4) | 12,6 (3) | 1,6 % |
| sel phosphaté de Nd $[[RO]_2P(O)O]_3Nd$ | 12,7 (6) | 12,2 (4) | 4% |
| sel phosphaté de Nd $[[RO]_2P(O)O]_3Nd$ | 12,6 (6) | 12,5 (4) | 0,8 % |
| Acétyl acétonate de Nd « témoin » | 31,7 (6) | 32,4 (4) | 2,2 % |
| Oxalate de Nd « témoin » | 37,7 (3) | 38,0 (3) | 0,8 % |

Les résultats obtenus par les deux techniques sont comparables (écart relatif < 4%).

**2) Synthèse de systèmes catalytiques « préformés » selon l'invention:**

a) Composition des systèmes catalytiques selon l'invention:

Chacun de ces systèmes comprend un sel phosphaté de néodyme tel que synthétisé selon le paragraphe 1) ci-dessus, qui est en suspension dans un solvant hydrocarboné inerte de bas poids moléculaire (constitué de cyclohexane, « CH » en abrégé ci-après ou de méthylcyclohexane, « MCH » en abrégé ci-après).

Ces systèmes catalytiques sont caractérisés par les rapports molaires relatifs suivants, par rapport au sel de néodyme :

Sel de Nd / butadiène (Bd ci-après) / HDiBA / CDEA = 1 /50/3 à 6 / 3.

b) Procédé de synthèse de ces systèmes catalytiques:

- Première étape :

En vue de l'obtention de ces systèmes catalytiques, on verse 15,6 g du sel de néodyme, à l'état de poudre, dans un réacteur de 1 litre préalablement nettoyé de ses impuretés. On soumet ensuite ce sel à un barbotage à l'azote par le fond du réacteur, pendant une durée de 15 min.

- Seconde étape :

On introduit 90 % (fraction massique) du solvant mentionné au paragraphe a) ci-dessus dans le réacteur contenant le sel de néodyme.

Lorsque le solvant utilisé est le cyclohexane, la durée de mise en contact du sel de néodyme avec ce solvant varie de 2 heures à 4 heures, et la température de mise en contact varie de 30° C à 60° C. Lorsque le solvant utilisé est le méthylcyclohexane, la durée de mise en contact du sel de néodyme avec ce solvant est de 30 min., et la température de mise en contact est de 30° C.

- Troisième étape :

On introduit ensuite du butadiène dans le réacteur (selon le rapport molaire sel / butadiène de 1/50 mentionné au paragraphe a) ci-dessus), à une température de 30°C, en vue de la « préformation » de chaque système catalytique.

- Quatrième étape :

On introduit ensuite dans le réacteur de l'hydrure de diisobutylaluminium (HDiBA) à titre d'agent d'alkylation du sel de néodyme, selon une concentration d'environ 1 M, ainsi qu'une quantité du solvant précité à la seconde étape correspondant à une fraction massique de 5 % de la totalité dudit solvant. La durée de l'alkylation est de 15 min. et la température de la réaction d'alkylation est de 30° C.

- Cinquième étape :

On introduit ensuite dans le réacteur du chlorure de diéthylaluminium (CDEA) à titre de donneur d'halogène, selon une concentration d'environ 1 M, ainsi qu'une quantité du solvant précité à la seconde étape correspondant à la fraction massique restante de 5 % de la totalité dudit solvant. La température du milieu réactionnel est portée à 60° C.

- Sixième étape :

On procède ensuite à une « préformation » (ou vieillissement) du mélange ainsi obtenu en maintenant cette température de 60° C pendant une durée variant de 2 heures à 4 heures.

- Septième étape :

On obtient ainsi environ 700 ml d'une solution de système catalytique. On procède à la vidange du réacteur et l'on transfère cette solution dans une bouteille "Steinie" de 750 ml, préalablement lavée, séchée et soumise à un barbotage à l'azote.

On stocke finalement la solution catalytique sous atmosphère d'azote dans un congélateur, à la température de -15° C.

Tableau 1 : détail des systèmes catalytiques préparés :

| Systèmes catalytiques | Solvatation (solvant / durée /T) | Bd/ Nd (mol) | Al/ Nd (mol) | Alkylation Durée / T | Cl/ Nd (mol) | Préformation Avec CDEA Durée / T |
|---|---|---|---|---|---|---|
| Système 1 | CH 2 h, 60° C | 50 | 6 | 15 min. / 30° C | 3 | 2 h, 60° C |
| Système 2 | CH 2 h, 60° C | 50 | 4 | 15 min. /30° C | 3 | 2 h, 60° C |
| Système 3 | CH 2 h, 60° C | 50 | 4 | 15 min. / 30° C | 3 | 2 h, 60° C |
| Système 4 | CH 2 h, 60° C | 50 | 4 | 15 min. / 30° C | 3 | 4 h, 60° C |
| Système 5 | CH 2 h, 60° C | 50 | 4 | 15 min. / 30° C | 3 | 4 h, 60° C |
| Système 6 | CH 2 h, 30° C | 50 | 4 | 15 min. / 30° C | 3 | 4 h, 60° C |
| Système 7 | CH 2 h, 30° C | 50 | 4 | 15 min. / 30° C | 3 | 4 h, 60° C |

(suite)

| Systèmes catalytiques | Solvatation (solvant / durée /T) | Bd/ Nd (mol) | Al/ Nd (mol) | Alkylation Durée / T | Cl/ Nd (mol) | Préformation Avec CDEA Durée / T |
|---|---|---|---|---|---|---|
| Système 8 | CH 2 h, 30° C | 50 | 4,5 | 15 min. / 30° C | 3 | 4 h, 60° C |
| Système 9 | CH 4 h, 60° C | 50 | 3 | 15 min. / 30° C | 3 | 2 h, 60° C |
| Système 10 | CH 2 h, 30° C | 50 | 4 | 15 min. / 30° C | 3 | 4 h, 60° C |
| Système 11 | CH 4 h, 60° C | 50 | 3 | 15 min. / 30° C | 3 | 2 h, 60° C |
| Système 12 | MCH 30 min., 30° C | 50 | 3 | 1 5 min. /30° C | 3 | 4 h, 60° C |
| Système 13 | MCH 30 min., 30° C | 50 | 3 | 15 min. / 30° C | 3 | 2 h, 60° C |

## II. Copolymérisation du butadiène et de l'isoprène au moyen des systèmes catalytiques précités :

### 1) Procédés de polymérisation mis en oeuvre :

On a réalisé 20 essais de polymérisation référencés A à T dans le tableau 2 ci-après pour l'obtention de copolymères de butadiène et d'isoprène, excepté aux essais D, G et S qui ont abouti à des homopolymères d'isoprène et aux essais C et H qui ont abouti à des homopolymères de butadiène.

On a réalisé les réactions de polymérisation soit en solution (le solvant étant le cyclohexane) pour les essais A, B, C, D, E, F, I, N, O, P, Q, R, S, T, soit en masse (i.e. sans solvant) pour les essais G, H, J, K, L, et M.

On a utilisé, à titre de réacteur de polymérisation :

- pour les essais C et D : une bouteille "Steinie" de 250 ml, la polymérisation étant réalisée avec une agitation dans un bac à eau ;
- pour les essais E, F, I, N, O, P, Q, R, S, T : un réacteur de 70 litres comportant une double enveloppe et un système d'agitation ;
- pour les essais G, H, J, K, L, M : un réacteur de type Werner constitué d'une cuve métallique de 2 litres comportant une double enveloppe, et d'un condenseur permettant de réguler la pression du réacteur. L'agitation est réalisée à l'aide de deux pales tournant en sens inverse et selon des vitesses de rotation différentes ;
- pour les essais A et B : une cuve de 14 litres avec double enveloppe et système d'agitation.

On notera que les essais A et B correspondent à des synthèses en continu, alors que tous les autres correspondent à des synthèses en discontinu.

L'isoprène utilisé à titre de co-monomère a été extrait en laboratoire d'une manière classique à partir d'une coupe de vapocraquage de naphta en C5, par une distillation de cette coupe C5 sur de l'anhydride maléique pour éliminer le cyclopentadiène résiduel, suivie d'un passage sur une colonne d'alumine pour éliminer les impuretés polaires, et d'un barbotage à l'azote pendant 20 min., juste avant la réaction de polymérisation.

On a fait varier dans les divers essais de polymérisation la base catalytique en néodyme de 30 $\mu$mol à 520 $\mu$mol pour 100 g de monomère (quantité de néodyme exprimée en $\mu$ Mcm ci-après). Concernant l'essai H (polymérisation réalisée sans solvant), on a ajouté au butadiène 650 $\mu$Mcm d'hydrure de diisobutylaluminium (HdiBA), préalablement à l'ajout du système catalytique.

En fin de polymérisation, on a ajouté de l'acétylacétone (selon un rapport molaire acétylacétone/ néodyme sensiblement égal à 30) pour stopper la réaction et de la N-1,3-diméthylbutyl-N'-phényl-p-phénylènediamine (6PPD en abrégé) comme agent de protection (selon une quantité de 0,2 pce).

### 2) Résultats obtenus :

La mesure du taux de conversion des monomères en fonction du temps de réaction est utilisée pour décrire la cinétique de polymérisation.

La viscosité inhérente $\eta_{inh}$ à 0,1 g/dl dans le toluène et la viscosité Mooney ML(1+4) (mesurée selon la norme ASTM D-1646) caractérisent la macrostructure de chaque polymère.

La température de transition vitreuse Tg de chaque polymère obtenu est mesurée par la technique d'analyse enthalpique différentielle (DSC), en utilisant un calorimètre différentiel commercialisé sous la dénomination « METTLER TOLEDO STAR SYSTEM ».

Pour déterminer la microstructure des polymères obtenus, on a utilisé soit la technique d'analyse RMN[13]C (résonance magnétique nucléaire du carbone 13, méthode absolue à l'incertitude de 0,1 % près, repérée par le signe * dans le tableau 2 ci-après), soit la technique NIR (proche infrarouge, utilisée pour toutes les autres mesures). Ces techniques ont permis d'établir les taux de motifs butadiène et isoprène, ainsi que les taux d'enchaînements cis-1,4.

Pour mettre en oeuvre la première technique d'analyse RMN[13]C, on a utilisé un spectrophotomètre commercialisé sous la dénomination « BRUKER AM250 ».

Pour mettre en oeuvre la seconde technique d'analyse NIR, on a utilisé un spectrophotomètre commercialisé sous la dénomination « BRUKER IFS25 », dans le domaine des vibrations harmoniques et combinaisons, avec des échantillons polymères ayant été préalablement étalonnés pour l'analyse RMN[13]C (cette technique NIR est rendue « quantitative » par un traitement mathématique).

Cette technique NIR est une méthode indirecte faisant appel à des élastomères « témoin » dont la microstructure a été mesurée par la technique de RMN [13]C. On utilise la relation quantitative (loi de Beer-Lambert) existant entre la répartition des monomères dans un élastomère et la forme du spectre NIR de celui-ci. Cette technique est mise en oeuvre en deux étapes d'étalonnage et de mesure :

a) <u>Etalonnage</u> :

- On procède à l'acquisition des spectres respectifs des élastomères « témoin ».
- On établit un modèle mathématique associant une microstructure à un spectre donné, ceci à l'aide de la méthode de régression PLS (Partial Least Squares) reposant sur une analyse factorielle des données spectrales. Les deux documents suivants traitent d'une manière approfondie de la théorie et de la mise en oeuvre de cette méthode d'analyse de données « multi-variées » :

  (1) P. GELADI et B. R. KOWALSKI« Partial Least Squares regression : a tutorial »,Analytica Chimica Acta, vol. 185, 1-17 (1986).
  (2) M. TENENHAUS« La régression PLS - Théorie et pratique »Paris, Editions Technip (1998).

b) <u>Mesure :</u>

- On procède à un enregistrement du spectre de l'échantillon.
- On réalise le calcul de la microstructure.

Le tableau 2 ci-après détaille les conditions opératoires suivies pour chaque polymérisation et les caractéristiques de macrostructure et de microstructure de chaque élastomère obtenu.

TABLEAU 2 :

| Essai | Système catalyt. tableau 1 | | Réaction de copolymérisation (S = solvant et M = monomères but. + isop.) | | | | | | Copolymère de butadiène (but.) et d'isoprène (isop.) | | | | |
|---|---|---|---|---|---|---|---|---|---|---|---|---|---|
| | n° | Al/ Nd | Nd en µMcm | Charge But/isop. (%) | S/ M | T (°C) | Tps réact° (min.) | Taux Conv° (%) | η$_{inh}$ dl/g | ML (1+4) | But/isop dans polymère | Cis-1,4 But/isop (%) | Tg mesure/ Tg calcul (° C) |
| A | 1 | 6 | 90 | 30/70 | 4 | 90 | 90 | 68 | 2,81 | 50 | 29/71 | 96/97 | -78 /-78,5 |
| B | 1 | 6 | 95 | 48/52 | 5 | 80 | 55 | 73 | 2,79 | 54 | 47/53 | 96/96 | -86/-87 |
| C | 2 | 4 | 520 | 100/0 | 7 | 60 | 15 | 100 | 2,50 | 43 | 100/0 | 93 | -108/- |
| D | 3 | 4 | 130 | 0/100 | 9 | 50 | 130 | 100 | 4,29 | 83 | 0*/100* | 98* | -63/- |
| E | 4 | 4 | 140 | 20/80 | 7 | 60 | 80 | 91 | 3,13 | 59 | 21/79 | 97/97 | -73/-74,5 |
| F | 4 | 4 | 160 | 40/60 | 7 | 60 | 50 | 91 | 3,02 | 59 | 41/59 | 97/97 | -83/-84 |
| G | 5 | 4 | 55 | 0/100 | 0 | 55 | 20 | 73 | 4,41 | 81 | 0*/100* | 97,5* | -63 /- |
| H | 6 | 4 | 30 | 100/0 | 0 | 30 | 30 | 91 | 2,74 | 47 | 100*/0* | 99 et 98* | -108 / - |
| I | 7 | 4 | 170 | 28/72 | 7 | 60 | 5 | 20 | - | - | 27/73 | 97/97 | - |
| | | | | | | | | 10 | 41 | - | - | 24/76 | 99/97 | - |
| | | | | | | | | 15 | 57 | - | - | 25/75 | 99/97 | - |
| | | | | | | | | 25 | 79 | - | - | 27/73 | 98/97 | - |
| | | | | | | | | 40 | 92 | 3,08 | 54 | 27/73 | 98/97 | -77 / -77 |
| J | 8 | 4,5 | 190 | 50/50 | 0 | 55 | 10 | 84 | 2,90 | 53 | 49/51 | 95/97 | -89 / -88 |
| K | 8 | 4,5 | 190 | 50/50 | 0 | 55 | 40 | 90 | 3,11 | 59 | 52/48 | 95/97 | -90/-89 |
| L | 9 | 3 | 140 | 20/80 | 0 | 55 | 60 | 88 | 3,17 | 59 | 20/80 | 92/97 | -74/-74 |
| M | 10 | 4 | 120 | 20/80 | 0 | 55 | 60 | 84 | 3,26 | 60 | 19/81 | 95/99 | -73/-73,5 |
| N | 11 | 3 | 150 | 20/80 | 7 | 60 | 60 | 92 | 3,47 | 63 | 20*/80* | 99*/98* | -74/-74 |
| O | 11 | 3 | 160 | 20/80 | 7 | 60 | 6 | 17 | - | - | 21/79 | 95/98 | - |
| | | | | | | | | 10 | 28 | - | - | 20/80 | 96/98 | -73/- |
| | | | | | | | | 20 | 55 | 2,84 | - | 20/80 | 98/99 | -74 /- |
| | | | | | | | | 30 | 66 | 3,14 | - | 20/80 | 99/99 | -73 / - |
| | | | | | | | | 45 | 79 | 3,21 | - | 20/80 | 99/98 | -74/- |

(suite)

| Essai | Système catalyt. tableau 1 | | Réaction de copolymérisation (S = solvant et M = monomères but. + isop.) | | | | | | Copolymère de butadiène (but.) et d'isoprène (isop.) | | | | |
|---|---|---|---|---|---|---|---|---|---|---|---|---|---|
| | n° | Al/ Nd | Nd en μMcm | Charge But/isop. (%) | S/ M | T (°C) | Tps réact° (min.) | Taux Conv° (%) | $\eta_{inh}$ dl/g | ML (1+4) | But/isop dans polymère | Cis-1,4 But/isop (%) | Tg mesure/ Tg calcul (° C) |
| | | | | | | | 60 | 86 | 3,33 | - | 20/80 | 98/99 | -73/- |
| | | | | | | | 70 | 89 | 3,53 | 64 | 20/80 | 99/98 | -74/-74 |
| P | 11 | 3 | 170 | 20/80 | 7 | 60 | 3 | 9 | - | - | 20/80 | 99/96 | - |
| | | | | | | | 6 | 19 | - | - | 20/80 | 99/97 | - |
| | | | | | | | 10 | 34 | - | - | 20/80 | 99/98 | -74 / - |
| | | | | | | | 20 | 60 | 2,85 | - | 20/80 | 99/99 | -74 / - |
| | | | | | | | 30 | 76 | 3,03 | - | 20/80 | 99/98 | -74 / - |
| | | | | | | | 45 | 89 | 3,19 | - | 21 /79 | 99/99 | -74/- |
| | | | | | | | 60 | 92 | 3,37 | 59 | 20/80 | 99/98 | -74 / -74 |
| Q | 11 | 3 | 195 | 40/60 | 7 | 60 | 2 | 11 | 1,49 | - | 40/60 | 95/98 | -82/- |
| | | | | | | | 5 | 29 | 2,05 | - | 39/61 | 97/99 | -82/- |
| | | | | | | | 10 | 55 | 2,58 | - | 38/62 | 98/98 | -82/- |
| | | | | | | | 15 | 72 | 2,76 | - | 38/62 | 99/98 | - |
| | | | | | | | 20 | 81 | 2,87 | - | 40/60 | 98/99 | -83 / - |
| | | | | | | | 30 | 90 | 2,97 | - | - | - | - |
| | | | | | | | 40 | 94 | 3,12 | 61 | 38/62 | 99/98 | -84 / -83 |
| R | 11 | 3 | 195 | 40/60 | 7 | 60 | 40 | 92 | 3,05 | 61 | 40/60 | 97/98 | -84 / -83 |
| S | 12 | 3 | 125 | 0/100 | 9 | 50 | 120 | 91 | 4,25 | 80 | 0*/100* | 98 et 98* | -63/- |
| T | 13 | 3 | 155 | 26/74 | 7 | 60 | 40 | 97 | 3,07 | 54 | 23/77 | 99/97 | -76/-75,5 |

Au vu de ces résultats, on notera que les copolymères de butadiène et d'isoprène obtenus (voir essais A, B, E, F, I à R et T) présentent, à divers taux de conversion, des taux de motifs butadiène et isoprène qui sont identiques ou pratiquement identiques (à plus ou moins 4 % près) aux taux de monomères butadiène et isoprène utilisés à titre de charge de polymérisation, respectivement, ce qui montre que ces monomères sont pratiquement équi-réactifs lors de la réaction de copolymérisation.

Le caractère extrêmement randomisant des systèmes catalytiques selon l'invention est ainsi établi, et il est confirmé par le fait que la température de transition vitreuse $T_{Gexp}$ de chaque copolymère de butadiène et d'isoprène, mesurée par la technique d'analyse enthalpique différentielle, est identique ou pratiquement identique à la température de transition vitreuse théorique $T_{Gth}$ dudit copolymère (que la polymérisation soit effectuée en continu ou en discontinu et à tout taux de conversion), calculée selon la loi de Fox :

$1/T_{Gth} = \alpha/T_{G(BR)} + \beta/ T_{G(IR)}$, où $T_{G(BR)}$ et $T_{G(IR)}$ sont respectivement les températures de transition vitreuse, mesurées par la même technique d'analyse enthalpique différentielle, d'un polybutadiène et d'un polyisoprène synthétisés au moyen du même système catalytique.

On notera par ailleurs que dans ces copolymères selon l'invention, les unités butadiène et isoprène comportent chacune un taux d'enchaînements cis-1,4, mesuré selon la technique de résonance magnétique nucléaire du carbone 13 ou de dosage par proche infrarouge, qui est en général égal ou supérieur à 95,0 %.

## Revendications

1. Procédé de préparation d'un copolymère statistique de butadiène et d'isoprène, ledit procédé consistant essentiellement à faire réagir un système catalytique en présence de butadiène et d'isoprène, **caractérisé en ce qu'**il consiste :

    • à utiliser, à titre de système catalytique, un système à base d'au moins :

    - un monomère diène conjugué,
    - un sel d'un ou plusieurs métaux de terre rare d'un acide phosphorique organique,
    - un agent d'alkylation constitué d'un alkylaluminium répondant à la formule $AlR_3$ ou $HAlR_2$, et
    - un donneur d'halogène constitué d'un halogénure d'alkylaluminium,

    ledit sel étant en suspension dans au moins un solvant hydrocarboné inerte, saturé et de type aliphatique ou alicyclique qui est compris dans ledit système catalytique, et le rapport molaire (agent d'alkylation / sel de terre rare) présentant une valeur allant de 1 à 8, et
    • à mettre en oeuvre la réaction de copolymérisation dans un solvant de polymérisation hydrocarboné inerte ou en masse.

2. Procédé de préparation d'un copolymère statistique de butadiène et d'isoprène selon la revendication 1, **caractérisé en ce qu'**il consiste à utiliser, à titre de système catalytique, un système qui est tel que ledit sel de terre rare est un tris[bis(2-éthylhexyl)phosphate] de terre(s) rare(s), de préférence le tris[bis(2-éthylhexyl)phosphate] de néodyme.

3. Procédé de préparation d'un copolymère statistique de butadiène et d'isoprène selon une des revendications précédentes, **caractérisé en ce qu'**il consiste à utiliser, à titre de système catalytique, un système comprenant ledit ou lesdits métaux de terre rare selon une concentration égale ou sensiblement égale à 0,02 mol/ 1.

4. Procédé de préparation d'un copolymère statistique de butadiène et d'isoprène selon une des revendications précédentes, **caractérisé en ce qu'**il consiste à utiliser, à titre de système catalytique, un système qui est tel que le rapport molaire (donneur d'halogène/ sel) appartient à un domaine allant de 2,6 à 3.

5. Procédé de préparation d'un copolymère statistique de butadiène et d'isoprène selon une des revendications précédentes, **caractérisé en ce qu'**il consiste à utiliser, à titre de système catalytique, un système qui est tel que le rapport molaire (monomère diène conjugué / sel) appartient à un domaine allant de 25 à 50.

6. Procédé de préparation d'un copolymère statistique de butadiène et d'isoprène selon une des revendications précédentes, **caractérisé en ce qu'**il consiste à utiliser, à titre de système catalytique, un système qui est tel que ledit monomère diène conjugué est le butadiène.

7. Procédé de préparation d'un copolymère statistique de butadiène et d'isoprène selon une des revendications précédentes, **caractérisé en ce qu'**il consiste à utiliser, à titre de système catalytique, un système qui est tel que ledit agent d'alkylation est l'hydrure de diisobutylaluminium.

8. Procédé de préparation d'un copolymère statistique de butadiène et d'isoprène selon une des revendications précédentes, **caractérisé en ce qu'**il consiste à utiliser, à titre de système catalytique, un système qui est tel que ledit ledit donneur d'halogène est le chlorure de diéthylaluminium.

9. Procédé de préparation d'un copolymère statistique de butadiène et d'isoprène selon une des revendications précédentes, **caractérisé en ce qu'**il consiste à utiliser, à titre de système catalytique, un système qui est tel que ledit rapport molaire (agent d'alkylation / sel de terre rare) appartient à un domaine allant de 1 à 5.

10. Procédé de préparation d'un copolymère statistique de butadiène et d'isoprène selon une des revendications précédentes, **caractérisé en ce que** les monomères butadiène et isoprène sont pratiquement équi-réactifs lors de la réaction de copolymérisation, de telle sorte que les fractions massiques $X_b$ et $X_i$ d'unités butadiène et isoprène dans ledit copolymère et les fractions massiques $x_b$ et $x_i$ de monomères butadiène et isoprène vérifient les relations :

$$-0,04 \leq (X_b - x_b) / x_b \leq 0,04 \qquad \text{et} \qquad -0,04 \leq (X_i - x_i) / x_i \leq 0,04.$$

11. Procédé de préparation d'un copolymère statistique de butadiène et d'isoprène selon une des revendications précédentes, **caractérisé en ce qu'**il consiste à mettre en oeuvre ladite réaction de copolymérisation à une température allant de -30° C à 100° C.

12. Copolymère statistique de butadiène et d'isoprène obtenu par un procédé selon une des revendications précédentes, **caractérisé en ce qu'**il comporte des unités butadiène et isoprène qui se succèdent d'une manière aléatoire pratiquement selon la loi de Bernouilli, de telle sorte que la température de transition vitreuse $T_{Gexp}$ dudit copolymère, mesurée par la technique d'analyse enthalpique différentielle, satisfasse à la relation suivante :

$$-0,05 \leq (T_{Gexp} - T_{Gth}) / T_{Gth} \leq 0,05 \quad ,$$

où $T_{Gth}$ est une température de transition vitreuse théorique dudit copolymère, calculée selon la loi de Fox :

$$1/T_{Gth} = \alpha/T_{G(BR)} + \beta/ T_{G(IR)} ,$$

où $T_{G(BR)}$ et $T_{G(IR)}$ sont respectivement les températures de transition vitreuse, mesurées par ladite technique d'analyse enthalpique différentielle, d'un polybutadiène et d'un polyisoprène synthétisés au moyen dudit système catalytique.

13. Copolymère statistique de butadiène et d'isoprène selon la revendication 12, **caractérisé en ce que** la température de transition vitreuse $T_{Gexp}$ dudit copolymère, mesurée par ladite technique d'analyse enthalpique différentielle, satisfait à la relation suivante :

$$-0,02 \leq (T_{Gexp} - T_{Gth}) / T_{Gth} \leq 0,02.$$

14. Copolymère statistique de butadiène et d'isoprène selon la revendication 12 ou 13, **caractérisé en ce que** lesdites unités butadiène et isoprène comportent chacune un taux d'enchaînements cis-1,4, mesuré selon la technique de résonance magnétique nucléaire du carbone 13 ou de dosage par proche infrarouge, qui est égal ou supérieur à 95,0 %, de préférence égal ou supérieur à 98,0 %.

15. Copolymère statistique de butadiène et d'isoprène selon la revendication 14, **caractérisé en ce que** lesdites unités butadiène et isoprène comportent chacune un taux d'enchaînements cis-1,4, mesuré selon la technique de résonance magnétique nucléaire du carbone 13 ou de dosage par proche infrarouge, qui est égal à 99,0 %.

16. Copolymère statistique de butadiène et d'isoprène selon une des revendications 12 à 15, **caractérisé en ce qu'**il présente une viscosité inhérente, mesurée à 25° C et à une concentration de 0,1 g/dl dans le toluène, qui est égale ou supérieure à 2,5 dl/g, de préférence égale ou supérieure à 3,0 dl/g.

**Claims**

1. A process for the preparation of a random copolymer of butadiene and isoprene, said process essentially consisting in reacting a catalytic system in the presence of butadiene and isoprene, **characterised in that** it consists in:

   • using, as catalytic system, a system based on at least:

     - a conjugated diene monomer,
     - an organic phosphoric acid salt of one or more rare earth metals,
     - an alkylating agent consisting of an alkylaluminium complying with the formula $AlR_3$ or $HAlR_2$, and
     - a halogen donor consisting of an alkylaluminium halide,

     said salt being in suspension in at least one inert, saturated and aliphatic or alicyclic hydrocarbon solvent, which is included in said catalytic system, and the "alkylating agent:rare earth salt" molar ratio having a value of from 1 to 8, and
   • performing the copolymerisation reaction in an inert hydrocarbon polymerisation solvent or without solvent.

2. A process for the preparation of a random copolymer of butadiene and isoprene according to Claim 1, **characterised in that** it consists in using, as catalytic system, a system which is such that said rare earth salt is a rare earth tris [bis(2-ethylhexy)phosphate], preferably neodymium tris[bis(2-ethylhexyl)phosphate].

3. A process for the preparation of a random copolymer of butadiene and isoprene according to one of the preceding Claims, **characterised in that** it consists in using, as catalytic system, a system comprising said rare earth metal or metals in a concentration equal or substantially equal to 0.02 mol/1.

4. A process for the preparation of a random copolymer of butadiene and isoprene according to one of the preceding Claims, **characterised in that** it consists in using, as catalytic system, a system which is such that the "halogen donor:salt" molar ratio falls within a range of from 2.6 to 3.

5. A process for the preparation of a random copolymer of butadiene and isoprene according to one of the preceding Claims, **characterised in that** it consists in using, as catalytic system, a system which is such that the "conjugated diene monomer:salt" molar ratio falls within a range of from 25 to 50.

6. A process for the preparation of a random copolymer of butadiene and isoprene according to one of the preceding Claims, **characterised in that** it consists in using, as catalytic system, a system which is such that said conjugated diene monomer is butadiene.

7. A process for the preparation of a random copolymer of butadiene and isoprene according to one of the preceding Claims, **characterised in that** it consists in using, as catalytic system, a system which is such that said alkylating agent is diisobutylaluminium hydride.

8. A process for the preparation of a random copolymer of butadiene and isoprene according to one of the preceding Claims, **characterised in that** it consists in using, as catalytic system, a system which is such that said halogen donor is diethylaluminium chloride.

9. A process for the preparation of a random copolymer of butadiene and isoprene according to one of the preceding Claims, **characterised in that** it consists in using, as catalytic system, a system which is such that the "alkylating agent:rare earth salt" molar ratio falls within a range of from 1 to 5.

**10.** A process for the preparation of a random copolymer of butadiene and isoprene according to one of the preceding Claims, **characterised in that** the butadiene and isoprene monomers are virtually equally reactive during the copolymerisation reaction, such that the mass fractions $X_b$ and $X_i$ of butadiene and isoprene units in said copolymer and the mass fractions $x_b$ and $x_i$ of butadiene and isoprene monomers used fulfil the following relationships:

$$-0.04 \leq (X_b - x_b) / x_b \leq 0.04 \qquad \text{and} \qquad -0.04 \leq (X_i - x_i) / x_i \leq 0.04.$$

**11.** A process for the preparation of a random copolymer of butadiene and isoprene according to one of the preceding Claims, **characterised in that** it consists in performing said copolymerisation reaction at a temperature of from -30°C to 100°C.

**12.** A random copolymer of butadiene and isoprene obtained by a process according to one of the preceding claims, **characterised in that** it comprises butadiene and isoprene units which succeed one another in a random manner virtually in accordance with Bernoulli's law, such that the glass transition temperature $T_{Gexp}$ of said copolymer, measured by the differential enthalpy analysis method, satisfies the following relationship:

$$-0.05 \leq (T_{Gexp} - T_{Gth}) / T_{Gth} \leq 0.05 \quad ,$$

where $T_{Gth}$ is a theoretical glass transition temperature for said copolymer, calculated in accordance with the Fox equation:

$$1/T_{Gth} = \alpha/T_{G(BR)} + \beta/ T_{G(IR)} ,$$

where $T_{G(BR)}$ and $T_{G(IR)}$ are respectively the glass transition temperatures, measured by said differential enthalpy analysis method, of a polybutadiene and a polyisoprene synthesised by means of said catalytic system.

**13.** A random copolymer of butadiene and isoprene according to Claim 12, **characterised in that** the glass transition temperature $T_{Gexp}$ of said copolymer, measured by said differential enthalpy analysis method, satisfies the following relationship:

$$-0.02 \leq (T_{Gexp} - T_{Gth}) / T_{Gth} \leq 0.02.$$

**14.** A random copolymer of butadiene and isoprene according to claim 12 or 13, **characterised in that** said butadiene and isoprene units each comprise a cis-1,4 linkage content, measured in accordance with the carbon 13 nuclear magnetic resonance method or by near infrared analysis, which is greater than or equal to 95.0%, preferably greater than or equal to 98.0%.

**15.** A random copolymer of butadiene and isoprene according to claim 14, **characterised in that** said butadiene and isoprene units each comprise a cis-1,4 linkage content, measured in accordance with the carbon 13 nuclear magnetic resonance method or by near infrared analysis, which is greater than or equal to 99.0%.

**16.** A random copolymer of butadiene and isoprene according to one of claims 12 to 15, **characterised in that** it exhibits an inherent viscosity, measured at 25°C and a concentration of 0.1 g/dl in toluene, which is greater than or equal to 2.5 dl/g, preferably greater than or equal to 3.0 dl/g.

**Patentansprüche**

**1.** Verfahren zur Herstellung eines statistischen Copolymers von Butadien und Isopren, wobei das Verfahren im Wesentlichen darin besteht, ein katalytisches System in Gegenwart von Butadien und Isopren reagieren zu lassen, **gekennzeichnet durch**:

• das Verwenden als katalytisches System eines Systems auf der Basis von mindestens

- einem konjugierten Dienmonomer,
- einem Salz eines oder mehrerer Seltenerdmetalle einer organischen Phosphorsäure,
- einem Alkylierungsmittel, das aus einem Alkylaluminium der Formel $AlR_3$ oder $HalR_2$ gebildet ist, und
- einem Halogendonator, der aus einem Alkylaluminiumhalogenid gebildet ist,

wobei das Salz in einer Suspension in mindestens einem inerten, gesättigten Kohlenwasserstoff-Lösemittel vom aliphatischen oder alicyclischen Typ vorliegt, das im katalytischen System enthalten ist, und das Molverhältnis (Alkylierungsmittel/Seltenerdmetallsalz) einen Wert von 1 bis 8 aufweist, und
• das Durchführen der Copolymerisationsreaktion in einem inerten Kohlenwasserstoff-Polymerisationslösemittel oder in Substanz.

2. Verfahren zur Herstellung eines statistischen Copolymers von Butadien und Isopren nach Anspruch 1, **dadurch gekennzeichnet, dass** es darin besteht, als katalytisches System ein System zu verwenden, das derart ist, dass das Seltenerdmetallsalz ein Tris[bis(2-ethylhexyl)phosphat] von einer oder mehreren Seltenerd(en), vorzugsweise Neodym-Tris[bis(2-ethylhexyl)phosphat], ist.

3. Verfahren zur Herstellung eines statistischen Copolymers von Butadien und Isopren nach einem der vorangegangenen Ansprüche, **dadurch gekennzeichnet, dass** es darin besteht, als katalytisches System ein System zu verwenden, das das oder die Seltenerdmetall(e) in einer Konzentration von oder im Wesentlichen von 0,02 ml/l umfasst.

4. Verfahren zur Herstellung eines statistischen Copolymers von Butadien und Isopren nach einem der vorangegangenen Ansprüche, **dadurch gekennzeichnet, dass** es darin besteht, als katalytisches System ein System zu verwenden, das derart ist, dass das Molverhältnis (Halogendonator/Salz) in einen Bereich von 2,6 bis 3 fällt.

5. Verfahren zur Herstellung eines statistischen Copolymers von Butadien und Isopren nach einem der vorangegangenen Ansprüche, **dadurch gekennzeichnet, dass** es darin besteht, als katalytisches System ein System zu verwenden, das derart ist, dass das Molverhältnis (konjugiertes Dienmonomer/Salz) in einen Bereich von 25 bis 50 fällt.

6. Verfahren zur Herstellung eines statistischen Copolymers von Butadien und Isopren nach einem der vorangegangenen Ansprüche, **dadurch gekennzeichnet, dass** es darin besteht, als katalytisches System ein System zu verwenden, das derart ist, dass das konjugierte Dienmonomer Butadien ist.

7. Verfahren zur Herstellung eines statistischen Copolymers von Butadien und Isopren nach einem der vorangegangenen Ansprüche, **dadurch gekennzeichnet, dass** es darin besteht, als katalytisches System ein System zu verwenden, das derart ist, dass das Alkylierungsmittel Diisobutylaluminiumhydrid ist.

8. Verfahren zur Herstellung eines statistischen Copolymers von Butadien und Isopren nach einem der vorangegangenen Ansprüche, **dadurch gekennzeichnet, dass** es darin besteht, als katalytisches System ein System zu verwenden, das derart ist, dass der Halogendonator Diethylaluminiumchlorid ist.

9. Verfahren zur Herstellung eines statistischen Copolymers von Butadien und Isopren nach einem der vorangegangenen Ansprüche, **dadurch gekennzeichnet, dass** es darin besteht, als katalytisches System ein System zu verwenden, das derart ist, dass das Molverhältnis (Alkylierungsmittel/ Seltenerdmetallsalz) in einen Bereich von 1 bis 5 fällt.

10. Verfahren zur Herstellung eines statistischen Copolymers von Butadien und Isopren nach einem der vorangegangenen Ansprüche, **dadurch gekennzeichnet, dass** die Butadien- und Isoprenmonomere in der Copolymerisationsreaktion praktisch gleich reaktiv sind, sodass die Massenanteile $X_b$ und $X_i$ der Butadien- und Isopreneinheiten im Copolymer und die Massenanteile $X_b$ und $x_i$ der Butadien- und Isoprenmonomere den folgenden Gleichungen genügen:

$$-0,04 \leq (X_b - x_b)/x_b \leq 0,04$$

und

$$-0,04 \leq (X_i - x_i)/x_i \leq 0,04.$$

11. Verfahren zur Herstellung eines statistischen Copolymers von Butadien und Isopren nach einem der vorangegangenen Ansprüche, **dadurch gekennzeichnet, dass** es darin besteht, die Copolymerisationsreaktion bei einer Temperatur von -30 °C bis 100 °C durchzuführen.

12. Statistisches Copolymer von Butadien und Isopren, das durch ein Verfahren nach einem der vorangegangenen Ansprüche erhalten wird, **dadurch gekennzeichnet, dass** es Butadien- und Isopreneinheiten aufweist, die praktisch dem Bernouillischen Gesetz nach zufällig aufeinander folgen, sodass die Glasübergangstemperatur $T_{Gexp}$ des Copolymers, gemessen mittels des Verfahrens der Differential-Thermoanalyse, der folgenden Gleichung genügt:

$$-0,05 \leq (T_{Gexp} - T_{Gth})/T_{Gth} \leq 0,05,$$

worin $T_{Gth}$ eine theoretische Glasübergangstemperatur des Copolymers ist, berechnet nach der Fox-Gleichung:

$$1/T_{Gth} = \alpha/T_{G(BR)} + \beta/T_{G(IR)},$$

worin $T_{G(BR)}$ und $T_{G(IR)}$ die Glasübergangstemperaturen, gemessen mittels des Verfahrens der DifferentialThermoanalyse, eines Polybutadiens bzw. eines Polyisoprens sind, die mithilfe des katalytischen Systems synthetisiert wurden.

13. Statistisches Copolymer von Butadien und Isopren nach Anspruch 12, **dadurch gekennzeichnet, dass** die Glasübergangstemperatur $T_{Gexp}$ des Copolymers, gemessen mittels des Verfahrens der DifferentialThermoanalyse, der folgenden Gleichung genügt:

$$-0,02 \leq (T_{Gexp} - T_{Gth})/T_{Gth} \leq 0,02.$$

14. Statistisches Copolymer von Butadien und Isopren nach Anspruch 12 oder 13, **dadurch gekennzeichnet, dass** die Butadien- und Isopreneinheiten jeweils einen Gehalt an cis-1,4-Ketten, gemessen mittels des Verfahrens der magnetischen Kernresonanz am Kohlenstoff-13 oder Nahinfrarotmessung, aufweisen, der gleich oder über 95,0 %, vorzugsweise gleich oder über 98,0 %, beträgt.

15. Statistisches Copolymer von Butadien und Isopren nach Anspruch 14, **dadurch gekennzeichnet, dass** die Butadien- und Isopreneinheiten jeweils einen Gehalt an cis-1,4-Ketten, gemessen mittels des Verfahrens der magnetischen Kernresonanz am Kohlenstoff-13 oder Nahinfrarotmessung, aufweisen, der gleich 99,0 % beträgt.

16. Statistisches Copolymer von Butadien und Isopren nach einem der Ansprüche 12 bis 15, **dadurch gekennzeichnet, dass** es eine inhärente Viskosität, gemessen bei 25 °C und einer Konzentration von 0,1 g/dl in Toluol, aufweist, die gleich oder über 2,5 dl/g, vorzugsweise gleich oder über 3,0 dl/g, beträgt.

## RÉFÉRENCES CITÉES DANS LA DESCRIPTION

**Documents brevets cités dans la description**

• EP 629640 A

**Littérature non-brevet citée dans la description**

• **P. GELADI ; B. R. KOWALSKI.** Partial Least Squares regression : a tutorial. *Analytica Chimica Acta,* 1986, vol. 185, 1-17

• **M. TENENHAUS.** La régression PLS - Théorie et pratique. 1998